# EUROPEAN PATENT SPECIFICATION

(11) **EP 3 841 423 B1**
(45) Date of publication and mention of the grant of the patent: **20.12.2023**
(21) Application number: 19744674.3
(22) Date of filing: 23.07.2019
(51) Int. Cl.: G02B 26/08, G02B 26/10

(54) **REDUCED NONLINEARITIES FOR RESONANT DEFLECTION OF A SCANNING MIRROR**
VERRINGERTE NICHTLINEARITÄTEN FÜR DIE RESONANTE ABLENKUNG EINES ABTASTSPIEGELS
NON-LINÉARITÉS RÉDUITES POUR DÉVIATION RÉSONANTE D'UN MIROIR DE BALAYAGE

(30) Priority: 26.07.2018 SE 1830222
(43) Date of publication of application: 30.06.2021
(73) Proprietor: Blickfeld GmbH, 80339 München (DE)
(72) Inventor: MÜLLER, Mathias, 82194 Gröbenzell (DE); KUYPERS, Jan, 81673 Munich (DE)
(74) Representative: Neusser, Sebastian
(86) International application number: PCT/EP2019/069779
(87) International publication number: WO 2020/020876

(56) References cited:
- DE-A1-102009 026 502
- DE-A1-102016 013 227
- US-A1- 2015 203 346

## Description

### BACKGROUND

Mirrors for scanning light (scanning mirrors) are employed in various use cases. One example use case is distance measurement using light (light detection and ranging; LIDAR; sometimes also referred to as laser ranging or LADAR). Pulsed or continuous-wave laser light is transmitted and, after reflection at an object, detected. For providing a lateral resolution, the light is scanned using a movable scanning mirror.

In various applications, it is desirable to implement a large deflection of the scanning mirror. Thereby, large scanning angles can be obtained. A large field-of-view (FOV) of a LIDAR application can be achieved. Sometimes, 2-D scanning is desired. For this, one or two scanning mirrors are deflected to scan the light along different axis.

Various conventional techniques of moving scanning mirrors use electrostatic actuators, see, e.g., US20120075685A1. The achievable deflection of the scanning mirror is limited in such reference implementations. To achieve larger deflections, an evacuated package is sometimes employed, which is costly and reduces a durability.

DE 10 2016 011 647 A1 describes techniques of moving a scanning mirror using bending piezo actuators.

US 2015/203346 A1 discloses an actuator which is capable of enlarging the swing frequency of the movable part while preventing or suppressing the destruction of the torsion bar.

DE 10 2009 026502 A1 discloses a micromechanical component for micromirror arrangement, having torsion spring device, which extends in direction of torsion axis between anchoring area and mobile element.

### SUMMARY

A need exists for advanced techniques of moving a scanning mirror. Specifically, a need exists for techniques which facilitate moving a scanning mirror using a simple, yet durable design of the corresponding actuator.

This need is met by the features of the independent claim. The features of the dependent claims define embodiments.

A scan unit includes a base and a mirror for deflecting light. The scan unit also includes a first set and a second set. The first set includes at least three torsion springs extending along an axis between the base and the mirror in a first plane. The second set includes at least three torsion springs extending along the axis between the base and the mirror in a second plane that is offset and parallel to the first plane.

### BRIEF DESCRIPTION OF THE DRAWINGS

FIG. 1 schematically illustrates a scan system including a scan unit according to various examples.
FIG. 2 is a perspective view of a scan unit including an elastic mount of a mirror, wherein the elastic mount includes torsion springs according to various examples.
FIG. 3 is a schematic illustration of bending piezoelectric actuators coupled to a scan unit to excite a torsional eigenmode associated with the elastic mount according to various examples.
FIG. 4 is a schematic illustration of bending piezoelectric actuators coupled to a scan unit to excite a torsional eigenmode associated with the elastic mount according to various examples.
FIG. 5 is a schematic illustration of bending piezoelectric actuators coupled to a scan unit to excite a torsional eigenmode associated with the elastic mount according to various examples, wherein FIG. 5 illustrates a rest state.
FIG. 6 is a schematic illustration of bending piezoelectric actuators coupled to a scan unit to excite a torsional eigenmode associated with the elastic mount according to various examples, wherein FIG. 6 illustrates actuated states.
FIG. 7 is a cross-sectional view of FIG. 3 in a rest state of the bending piezoelectric actuators according to various examples.
FIG. 8 is a cross-sectional view of FIG. 3 in an out-of-phase actuated state of the bending piezoelectric actuators according to various examples.
FIG. 9 is a cross-sectional view of FIG. 3 in an in-phase actuated state of the bending piezoelectric actuators according to various examples.
FIG. 10 schematically illustrates an implementation of the elastic mount of the scan unit according to various examples.
FIG. 11 schematically illustrates an implementation of the elastic mount of the scan unit according to various examples.
FIG. 12 schematically illustrates an implementation of the elastic mount of the scan unit according to various examples.
FIG. 13 schematically illustrates an implementation of the elastic mount of the scan unit according to various examples.
FIG. 14 schematically illustrates an implementation of the elastic mount of the scan unit according to various examples.
FIG. 15 schematically illustrates an implementation of the elastic mount of the scan unit according to various examples.
FIG. 16 schematically illustrates a degressive, progressive, and harmonic frequency response of an example elastic mount.

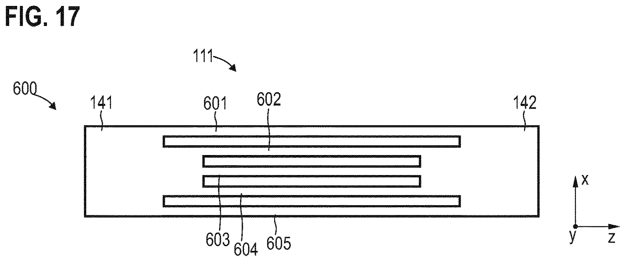

FIG. 17 schematically illustrates an implementation of the elastic mount of the scan unit according to various examples.
FIG. 18 schematically illustrates an implementation of the elastic mount of the scan unit according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of using a mirror to steer light are described. The mirror may be moved by reversible deformation at least one elastic spring. Tailored deflection of the mirror facilitates steering of the light. The at least one spring may implement an elastic mount. The spring can deform reversibly, i.e., without structural damage to the material.

For example, the techniques described herein may facilitate 1-D or 2-D scanning of light.

Scanning of light can correspond to repetitively redirecting light using different transmission angles. For this, the light can be steered by one or more mirrors, sometimes referred to as scanning mirrors. Larger scanning areas correspond to larger changes in the transmission angles; larger changes in the transmission angles can be achieved by larger deflection of the scanning mirror. Thereby, a FOV of the scanning can be increased. In some examples, light may be scanned along at least one axis using multiple wavelengths and a diffractive element. For example, a mirror may be used to scan a first axis. The mirror may be structured with a diffractive grating that moves along with the mirror. Then, by using multiple wavelengths, the second axis can be scanned.

It is possible to implement transmission angles by deflecting the scanning mirror in accordance with one or more degrees of freedom of motion of the mirror. For example, the mirror may be rotated, tilted, shifted, etc.. As a general rule, the various techniques described herein may rely on various degrees of freedom for the motion of the mirror. Examples include transversal motion or rotation.

According to some examples, resonant or semi-resonant deflection of the elastic mount of the scanning mirror is possible. The at least six torsion springs of the elastic mount may be resonantly or semi-resonantly actuated. Thereby, large changes in the transmission angles can be achieved. Large scanning areas can be implemented.

As a general rule, the techniques described herein may find application in various use cases.

Example use cases include, but are not limited to: LIDAR with lateral resolution, spectrometers, projectors, endoscopes, etc.. Hereinafter, for sake of brevity, reference is primarily made to LIDAR use cases; similar techniques may be readily employed for other use cases.

The scanning mirror and the elastic mount are part of a scan unit. A scan system may include the scan unit, a light source configured to emit light to be scanned, and/or a detector configured to receive reflected light. The scan system can also include one or more actuators to actuate the elastic mount, to thereby deflect the scanning mirror.

According to various examples, it would be possible to scan laser light. For example, coherent or incoherent laser light can be used. Polarized or non-polarized laser light may be used. Pulsed laser light may be used. For example, short laser pulses having a width in the range of picoseconds or nanoseconds may be used. For example, a pulse duration in the range of 0.5 - 3 nanoseconds may be used. The laser light can have a wavelength in the range of 700 - 1800 nanometers, specifically of 1550 nanometers or 950 nanometers. For the sake of simplicity, hereinafter, reference is primarily made to laser light; the various described examples can be readily applied to scanning light from non-laser light sources, e.g., RGB light sources, light-emitting diodes, etc.

As a general rule, in the various examples described herein, at least six torsion springs are used to implement the elastic mount. According to the invention, at least six torsion springs coupled in parallel are used. The at least six torsion springs are arranged in two parallel planes.

The springs can have a form-induced elasticity and/or a material-induced elasticity. The mirror is attached to a movable end of the elastic mount. By torsion and/or transversal motion of the springs, rotation and/or tilt of the mirror can result. Generally, a position and/or orientation (pose) of the mirror is changed, i.e., the mirror is deflected, by the deformation of the elastic mount of the mirror.

According to the invention, torsion springs are used. The torsion springs can have a geometry and arrangement that facilitates torsion of the springs with respect to a torsional axis. For example, a lowest-order eigenmode may be a torsional eigenmode for torsion springs. The torsional eigenmode may have a large Q-factor, i.e., a frequency response having a small full width at half maximum. Higher eigenmodes may include flexure modes.

The employed torsion springs of the elastic mount can have a length in the range of 2 millimeters - 8 millimeters, e.g., in the range of 3 millimeters -6 millimeters. The mirror springs of the elastic mount can be formed straight in a rest state without deflection. A cross-sectional diameter of the springs can be in the range of 50 micrometers - 250 micrometers. It would be possible that the elastic mount and/or the mirror is formed from Silicon. It would be possible that the torsion springs are fabricated from Silicon, e.g., using MEMS techniques and/or micromachining. For example, a longitudinal axis of the one or more torsion springs may be aligned with a <110> or <100> direction of crystalline Silicon.

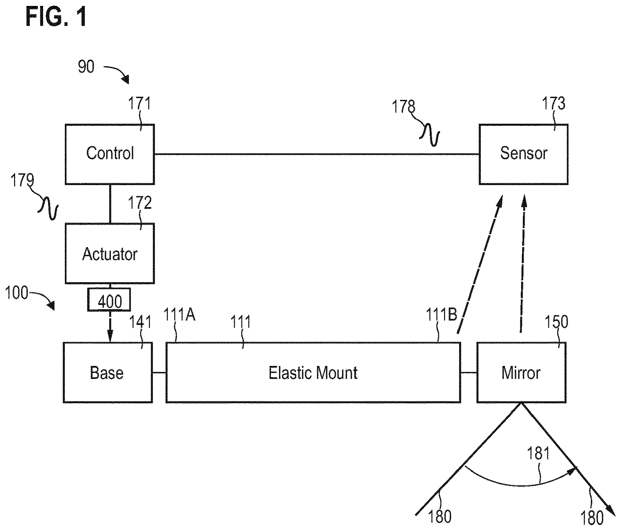

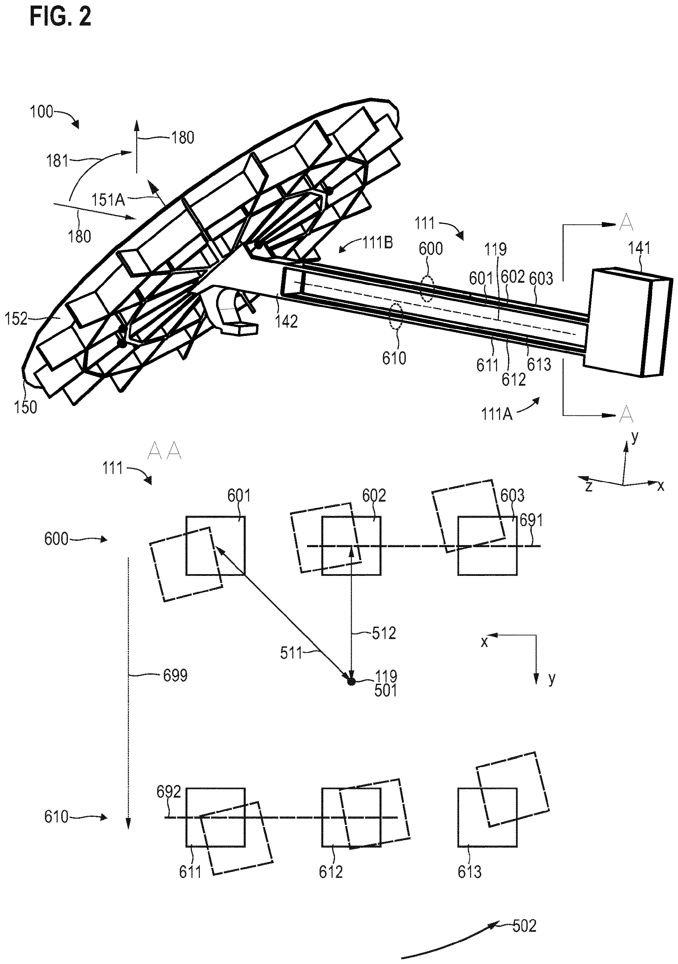

In the various examples described herein, it would be possible that the elastic mount extends away from an outer circumference of a reflective area of the mirror. For example, the mirror springs of the elastic mount could extend in a plane defined by the reflective area of the scanning mirror or in a parallel plane thereto (in-plane design). See, e.g., WO2018055513: FIG. B4C; or US20100296146A1: FIG. 1A; or US8729770B1: FIG. 2. In alternative examples, it would be possible that the elastic mount does not extend in the plane defined by the reflective area; but rather encloses an angle, e.g., in the range of 30° - 90°, optionally 45°. As a general rule, it would be possible that the elastic mount extends away from a backside of the mirror (out-of-plane design). Periscope-type scanning would be possible. See, e.g., DE 10 2016 013 227 A1: FIG. 2.

In various techniques it would be possible that the elastic mount and/or the mirror are fabricated using techniques of microelectromechanical systems (MEMS) and/or micromachining. As such, the mirror may be referred to as micromirror. For example, appropriate lithography process steps and/or etching process steps can be applied to a wafer to form the elastic mount and/or the mirror. For example, reactive ion beam etching could be implemented. A Silicon-on-Insulator wafer could be used.

Hereinafter, techniques are described which facilitate tailored dynamics of the elastic mount.

Specifically, techniques are described which facilitate tailoring the dynamics of the elastic mount such that a frequency response of the mass-spring system formed by (i) the mirror and *(ii)* the elastic mount does not exhibit a strong non-linear contribution. According to some examples, such a frequency response may be modeled by a harmonic oscillator and may be, hence, labeled harmonic frequency response.

To achieve this, according to the invention it has been observed that a configuration of the elastic mount with two or more sets of torsion springs is helpful, wherein each set includes three or more torsion springs. Moreover, the torsion springs of the two or more sets are arranged in different planes that are parallel to each other, i.e., offset to each other perpendicular to the torsional axis.

By using three or more torsion springs, an asymmetry in the configuration of the elastic mount can be easily created. This asymmetry can help to reduce the non-linear contributions.

FIG. 1 schematically illustrates aspects with respect to a scan system 90. The scan system 90 may include a light source, e.g., a laser diode, and a detector (not shown in FIG. 1).

The scan system 90 includes a scan unit 100. The scan unit 100 includes an elastic mount 111 of a mirror 150. The mirror 150 is configured to steer light 180, thereby defining a transmission angle 181. A base 141 associated with the elastic mount 111 is at a first end 111A of the elastic mount 111 which is opposite from the second end 111B at which the mirror 150 can be attached.

FIG. 1 also illustrates an actuator 172 which is configured to exert a force on the elastic mount 111 via the base 141 upon actuation, to thereby trigger a reversible deformation of the elastic mount 111. This deformation results in a deflection of the mirror 150, i.e., a change of the pose of the mirror 150, which, in turn, results in a change of the transmission angle 181.

The actuator 172 can be implemented using one or more piezoelectric actuators, specifically bending piezoelectric actuators. Other alternatives for implementation of the actuator include magnetic drives.

The operation of the actuator 172 is controlled by a control signal 179 which is output by a control device 171. The control signal 179 can include a one or more frequency components. The one or more frequency components can be appropriately selected in order to facilitate resonant or semi-resonant deflection of the elastic mount 111. The one or more frequency components, in other words, can be matched to one or more eigenmodes of the elastic mount 111 or, more specifically, of a mass-spring system formed by the mirror 150 and the elastic mount 111.

The control device 171, in the example of FIG. 1, is configured to determine the control signal 179 based on a measurement signal 178 received from a sensor 173. The sensor 173 is configured to provide the measurement signal 178 which is indicative of the pose of the mirror 150. A closed-loop control can be implemented. The closed-loop control can be configured to operate the actuator 172 to drive one or more wanted eigenmodes; and to suppress one or more unwanted eigenmodes of the mass-spring system. A phase-locked loop control would be possible. The wanted eigenmode is, in some examples, the lowest order torsional eigenmode; other modes, e.g., flexure modes and higher-order torsional modes are often unwanted.

As illustrated in FIG. 1, the actuator 172 is coupled with the base 141 via a coupling 400. The force exerted by the actuator 172 onto the base 141 to deflect the base 141 is transferred via the coupling 400; then, by deflection of the base 141, the elastic mount 111 is actuated. The elastic coupling 400 can thus provide a transmission functionality between deflection of the actuator 172 and deflection of the base 141.

FIG. 2 illustrates aspects with respect to the scan unit 100. FIG. 2 is a perspective view of an example structural implementation of the scan unit 100. For example, the scan unit 100 could be fabricated from Silicon, e.g., using MEMS techniques and/or micromachining.

According to the invention and as shown in the example of FIG. 2, the scan unit 100 includes a mirror 150. The mirror 150 has a reflective front side as a reflective area (obstructed from view in FIG. 2); as well as an opposite backside 152. The front side may have an integrated dispersive grating, to steer light according to its wavelength. The mirror 150 has a backside structure including fins and cavities - which is generally optional. Thereby, the mass moment of inertia of the mirror 150 can be tailored by appropriate geometrical implementation of the backside structure. The eigenfrequencies of the various motional degrees of freedom of the elastic mount 111 - including torsion and transversal deflection - can thereby be adjusted.

In the example of FIG. 2, six torsion springs 601-603, 611-613 (the torsion springs are partly obstructed from view in the perspective of FIG. 2) of the elastic mount 111 extend away from the backside 152 of the mirror, towards the base 141 (the elastic coupling 400 is not illustrated in FIG. 2). All torsion springs 601-603, 611-613 extend along the z-axis; a longitudinal center axis 119 is illustrated. A spacer 142 is attached to the backside 152 of the mirror and provides a coupling between the mirror 150 and the elastic mount 111.

As a general rule, while in FIG. 2 an out-of-plane arrangement of the elastic mount 111 and the mirror 150 is illustrated, in would also be possible to implement an in-plane arrangement of the elastic mount 111 and the mirror 150: here, the mirror spring(s) of the elastic mount 111 can extend in planes coincident with or parallel to the plane of the reflective area of the mirror 150.

The elastic mount 111 extends away from a center of the backside 152 of the mirror 150. Thereby, an imbalance is avoided when providing a torsion 502 of the elastic mount (compare inset of FIG. 2 which is a cross-sectional view along the line A - A).

In the example of FIG. 2, the torsion springs 601-603, 611-613 are grouped into two (logical) sets 600, 610: the set 600 includes the torsion springs 601-603 that are arranged in a plane 691 (extending along the x-axis and the z-axis) and a set 610 includes the torsion springs 611-613 that are arranged in a plane 692 (extending along the x-axis and the z-axis, but offset to the plane 691).

While in the example of FIG. 2, there are two sets 600, 610, in other examples, there may be more than two sets, each set being arranged in a respective plane extending along the xz axis. Further, while in the example of FIG. 2, each set 600, 610 includes three respective torsion springs 601-603, 611-613, in other examples, each set may include more than three torsion springs, e.g., each set may include four, five or six torsion springs.

As illustrated in FIG. 2, it would be possible to map the set 600 by a global translational shift 699 onto the set 610 (along the y-axis). In other words, the torsion spring 601-603 of the set 600 and the torsion springs 611-613 of the set 610 are configured alike, but arranged offset from each other. However, in other examples, different sets may not be configured alike. By such a configuration, it is possible to facilitate easy manufacture. Further, nonlinearities can be avoided.

The torsion 502 results in a twist of the torsion springs 601-603, 611-613 around the center axis 119 - which, therefore, is coincident with the respective torsion axis 501. Because all torsion spring 601-603, 611-613 are coupled to the common base 141, they implement a coherent torsion 502 and form the springs of a common mass-spring system. The torsion axis 501 is arranged in between the plane 691 and the plane 692.

As a general rule, the center axis 119 may be offset from the torsion axis 501. For example, the torsion axis 501 can be offset from the center axis 119 by using different geometrical parameters for the torsion springs 601-603, 611-613.

In addition to the twist of the torsion springs 601-603, 611-613 around the torsion axis 501, the torsion 502 also results in dynamic deformation of each individual torsion spring 601-603, 611-613. Therefore, while in the rest position (full line in the inset of FIG. 2), the torsion springs 601-603, 611-613 have a square cross-sectional area, the cross-sectional area is deformed upon deflection. The dynamic deformation depends on a distance 511, 512 of each torsion spring 601-603, 611-613 to the torsion axis 501: for example, the dynamic deformation is smaller for the center torsion springs 602, 612 which have a shorter distance 512 to the torsion axis 501 if compared to the outer torsion springs 601, 603, 611, 613 that have a larger distance 511 to the torsion axis 501. According to various examples described herein, it becomes possible to tailor the dynamics of the elastic mount 111; along with the dynamic deformation of the various torsion springs 601-603, 611-613.

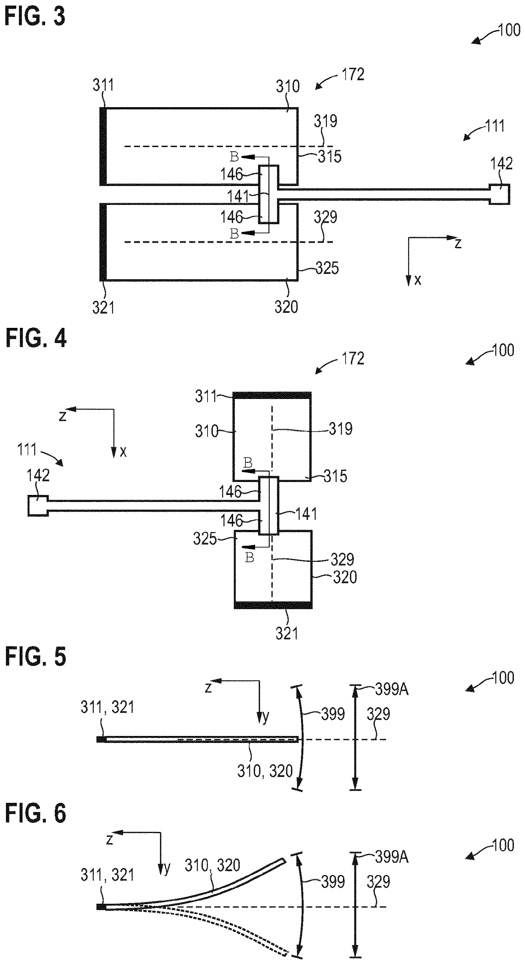

FIGs. 3 - 6 illustrate aspects with respect to the actuator 172. In FIGs. 3-6, the elastic mount 111 is schematically illustrated, without resolving the individual torsion springs 601-603, 611-613 of the elastic mount 111, for sake of simplicity. Further, for sake of simplicity, in FIGs. 3 - 5, the mirror is not illustrated, but could be attached to the spacer 142 in an out-of-plane arrangement (cf. FIG. 2) or an in-plane arrangement.

The actuator 172 is coupled with the base 141 next to the respective end 111A of the elastic mount 111 - while the mirror is coupled to the opposite end 111B of the elastic mount 111 (also cf. FIGs. 1 and 2).

In the examples of FIGs. 3 - 5, the actuator 172 is implemented by a pair of bending piezoelectric actuators 310, 320. The bending piezoelectric actuators 310, 320 are coupled to interface elements 146 of the base 141 of the scan unit 100. For example, an adhesive may be used to couple the bending piezoelectric actuators 310, 320 to the interface elements. In the example of FIGs. 3-5, two interface elements 146 - roughly shaped as wings of the base 141 - are arranged on opposite sides of the base 141.

As a general rule, instead of using a pair of bending piezoelectric actuators 310, 320, it would be possible to only use a single bending piezo (not illustrated). Then, one of the interface elements 146 may be fixed, e.g., with respect to a reference coordinate system defined by the housing, etc..

FIG. 5 is a side view of the bending piezoelectric actuators 310, 320. FIG. 5 illustrates the bending piezoelectric actuators 310, 320 in their rest position, e.g., if there is the control signal 179 having zero level being applied. FIG. 6 illustrates the reversal states of the deflection 399 of the bending piezoelectric actuators 310, 320.

Referring again to FIG. 3: for example, it would be possible that the fixed end 311, 321 forms a non-elastic coupling between the bending piezoelectric actuators 310, 320 and a housing of the scan system 90 (not illustrated in FIGs. 3 - 5).

In the example of FIG. 3, the bending piezoelectric actuators 310, 320 are aligned essentially in parallel with each other. Also, a head-to-tail arrangement of the bending piezoelectric actuators 310, 320 would be possible; or, generally, an arbitrary orientation in between the longitudinal axis 319, 329. The example of FIG. 4 generally corresponds to the example of FIG. 3, wherein, in FIG. 4, another arrangement of the bending piezoelectric actuators 310, 320 with respect to the elastic mount 111 is illustrated (rotated by 90° in their plane if compared to FIG. 3).

By applying a voltage to electrical contacts of the bending piezoelectric actuators 310, 320 - using a non-zero level of the control signal 179 -, the bending piezoelectric actuators 310, 320 are bent along the longitudinal axis 319. For this, the bending piezoelectric actuators 310, 320 typically include a layer stack of different materials (not illustrated in FIG. 3 - 5). Thereby, a movable end 315, 325 of the bending piezoelectric actuators 310, 320 is displaced with respect to a fixed end 311, 321 perpendicular to the respective longitudinal axis 319, 329 (in the example of FIG. 3, this deflection is oriented perpendicular to the drawing plane). This deflection 399 of the bending piezoelectric actuators 310, 320 is illustrated in FIG. 5. In FIG. 5, the peak-to-peak stroke length 399A is illustrated. The bending piezoelectric actuators 310, 320 perform a quasi-linear motion along the y-direction.

As a general rule, other kinds and types of actuators may be used, for example a magnetic drive.

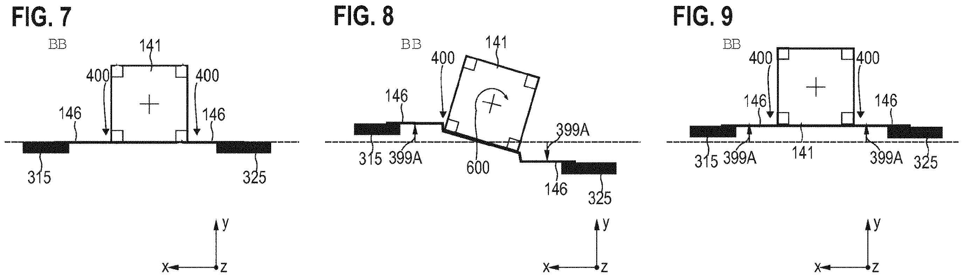

By tailoring the deflection 399 of the bending piezoelectric actuators 310, 320, it is possible to deflect the elastic mount 111, by deflecting the base 141 via the elastic coupling 400 (not illustrated in FIGs. 3 - 5). This function of the actuator 172 is explained with respect to FIGs. 7-9.

FIGs. 7-9 illustrate aspects with respect to deflecting the base 141. FIGs. 7 - 9 are cross-sectional views along the line B-B in FIG. 3 or FIG. 4.

Generally, by deflecting the base 141, the elastic mount 111 can be actuated. For example, the base 141 can be deflected periodically at one or more frequencies which resonantly or semi-resonantly excite a torsional eigenmode of the mass-spring system formed by the elastic mount 111 and the mirror 150. Alternatively or additionally, the base 141 can be deflected periodically at one or more frequencies which resonantly or semi-resonantly excite a transversal eigenmode of the mass-spring system (flexure eigenmode).

FIG. 7 illustrates the bending piezoelectric actuators 310, 320 in their rest position. The base 141 is not deflected.

FIG. 8 illustrates an out-of-phase deflection of the bending piezoelectric actuators 310, 320 which result in a rotational motion of the base 141 (the axis of rotation 550 is oriented perpendicular in the drawing plane of FIG. 8). Such a rotational motion of the base 141 can effectively couple energy into the torsional eigenmode of the mass-spring system formed by the mirror 150 and the elastic mount 111 which can thereby be excited/driven.

FIG. 9 illustrates an in-phase deflection of the bending piezoelectric actuators 310, 320 which results in a translational motion of the base 141 (the axis of motion is oriented up-down in the drawing plane of FIG. 9). Such a translational motion of the base 141 can effectively couple energy into the transversal eigenmode of the mass-spring system formed by the elastic mount 111 and the mirror 150.

As illustrated in FIGs. 3-9, the force exerted by the bending piezoelectric actuators 310, 320 to move the base 141 is transferred via the interface elements 146. To accommodate for the rotation of the base 141, elasticity of the coupling 400 between the interface elements 146 and the base 141 is provided for (cf. FIG. 8).

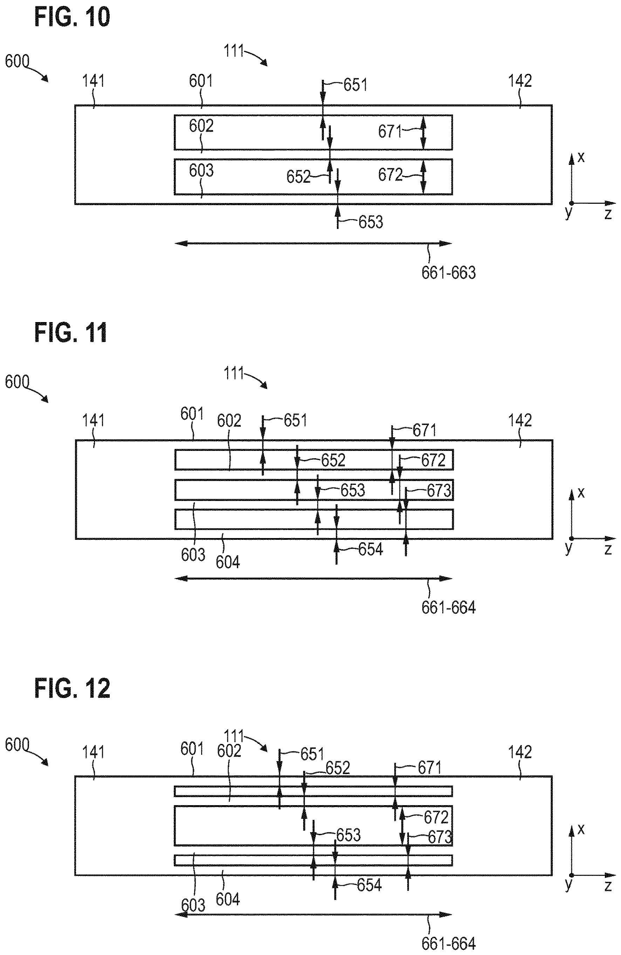

FIGs. 10 - 15 illustrate aspects with respect to the implementation of the elastic mount 111. In FIGs. 10 - 15, for sake of simplicity, only the torsion spring 601-604 of the set 600 are illustrated; is already discussed above, it would be possible that the set 610 is configured in the same manner as the set 600.

FIGs. 10 - 15 illustrate different implementations of the elastic mount 111, wherein one or more geometrical parameters of the torsion springs 601-604 of the set 600 are varied from implementation to implementation. It is possible to combine the examples of FIGs. 10 - 15 to form further examples. The geometrical parameters that may be tuned include: the length of the torsional springs along the z-axis; the cross-sectional area of the cross-section in the xy-plane; a shape of this cross-section; a width along the x-axis; and a width along the y-axis.

In FIG. 10, the implementation of the elastic mount 111 according to FIG. 2 is illustrated: i.e., there is a count of three torsion spring 601-603. The torsion springs 601-603 all have the same width 651-653. Also, a gap width 671, 672 between neighboring torsion springs 601-603 is fixed. Furthermore, all torsion spring 601-603 have the same length 661-663.

The torsion springs 601, 603 are outer torsion springs, because they enclose the inner torsion spring 602 (in the zx-plane).

FIG. 11 illustrates another implementation of the elastic mount 111. The implementation of FIG. 11 generally corresponds to the implementation of FIG. 10: again, all torsion spring 601-604 have the same width, the gap width 671-673 is fixed, and all torsion springs 601-604 have the same length 661-664. However, the count of torsion springs 601-604 of the set 600 is increased from three (in FIG. 10) to four in FIG. 11. The torsion springs 601, 604 are outer torsion springs, because they enclose the inner torsion springs 602, 603.

By providing a larger count of torsion springs, there is generally a tendency that the overall spring stiffness of the elastic mount 111 increases. Then, the eigenfrequency of the torsion eigenmode also increases - which can be desirable in various applications. At the same time, the dynamic deformation of the individual torsion springs is not affected significantly; which helps to avoid damage to the material. A higher stiffness may result in a larger power required to drive the torsional eigenmode.

It has been found that using three or four torsion springs per set 600, 610 provides a reasonable eigenfrequency - e.g., in the range of 150 Hz to 300 Hz, depending on the weight of the mirror 150, etc.. At the same time, the power required to drive the torsional eigenmode can be handled by the actuators 310, 320.

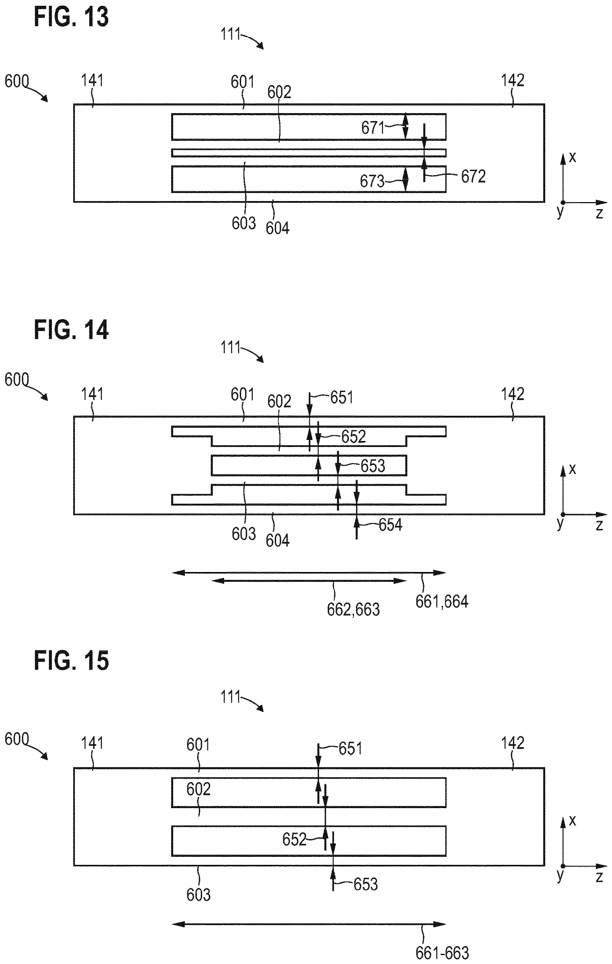

FIG. 12 illustrates another implementation of the elastic mount 111. The implementation of FIG. 12 generally corresponds to the implementation of FIG. 11 in that there is a count of four torsion springs that are shaped like. However, in the example of FIG. 12, the inter-spring gap width 671-673 is not fixed: The gap width 671-673 between the two inner torsion springs 602, 603 is larger than the gap width 671, 673 between a respective one of the inner torsion springs 602, 603 and a respective one of the outer torsion springs 601, 604. A somewhat inverted scenario with varying inter-torsion spring gap width 671-673 is illustrated in FIG. 13: here, the gap width 672 is smaller than the gap widths 671, 673.

As will be appreciated from FIGs. 12 and 13, as a general rule it is possible to vary the inter-torsion spring gap width across the torsion springs of a set, perpendicular to the torsion axis 501. Thereby, an asymmetry of the geometry can be introduced which can help to reduce non-linear dynamics.

FIG. 14 illustrates another implementation of the elastic mount 111. The implementation of FIG. 14 generally corresponds to the implementation of FIG. 11: again, all four torsion springs 601-604 have the same gap width 651-654 (albeit generally the gap width 651-653 may be varied across the set 600 and/or the set 610). However, in the example of FIG. 14, the inner torsion springs 602, 603 have a shorter length 662, 663 if compared to the length 661, 664 of the outer torsion springs 601, 604.

It has been found that by reducing the length 662, 663 of the inner torsion spring(s), it becomes possible to suppress non-linear dynamics of the mass-spring system. This can be motivated by the shorter distance 512 of the inner torsion spring(s) from the torsion axis 501 if compared to the distance 511 of the outer torsion springs (cf FIG. 2).

As a general rule, it would be possible that the length of one or more inner torsion springs is in the range of 70% to 95% of the length of the outer torsion springs of a given set. This may correspond with the following finding: As a general rule, it would be possible that a ratio between (*i*) the length 662, 663 of the inner torsion spring(s) and *(ii)* the length 661, 664 of the outer torsion springs corresponds to a ratio between (*i*) the distance 512 between the inner torsion spring(s) and the torsion axis 501 and *(ii)* the distance 511 between the outer torsion springs and the torsion axis 501.

FIG. 15 illustrates another implementation of the elastic mount 111. The implementation of FIG. 15 includes a count of three torsion spring 601-603 that have varying widths 651-653. Specifically, the width 652 of the inner torsion spring 602 is larger than the width 651, 653 of the outer torsion springs 601, 603. Thereby, also the cross-sectional area of the torsion spring 602 is increased if compared to the cross-sectional area of the outer torsion springs 601, 603.

This allows to increase the stiffness of the elastic mount 111; thereby, higher resonance frequencies can be obtained. Typically, this increase in the cross sectional area is accompanied by an increase in the elastic deformation; however, because the inner torsion spring 602 has a smaller distance 512 to the torsion axis 501, the elastic deformation is generally smaller for the inner torsion spring 602 in absolute terms.

From a comparison of FIGs. 10-15 it follows that in various examples various geometrical parameters of the torsion springs of a given set can be varied, the geometrical parameters being selected from the following group: the length; a width; a shape of a cross section; and scenario of a cross-section. For example, well above various scenarios have been described in which torsion springs having a square shaped cross-section are used, in other examples, this shape can be varied from torsion spring to torsion spring. Thereby, the elastic deformation can be tailored, e.g., by rounding off edges.

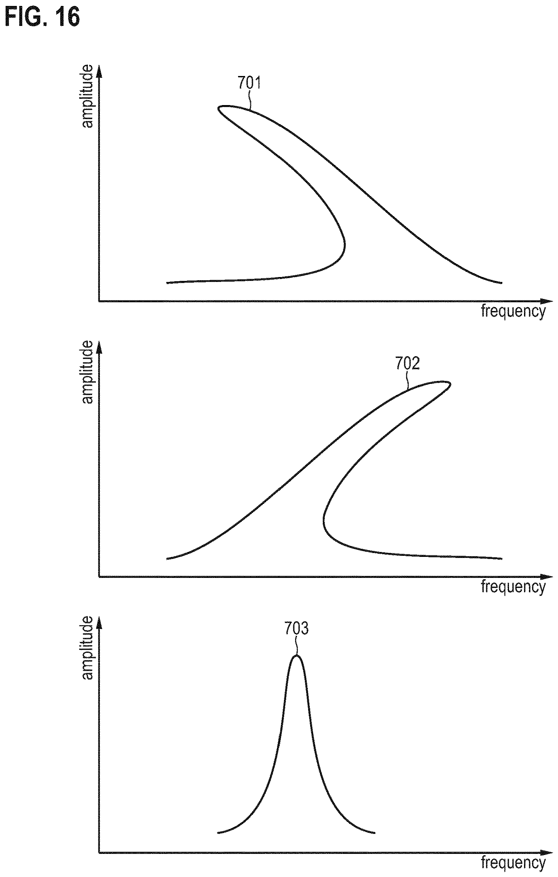

FIG. 16 illustrates frequency responses 701-703: the frequency response 701 is degressive, due to non-linear dynamics of the underlying mass-spring system; the frequency response 702 is progressive, due to non-linear dynamics of the underlying mass-spring system; while the frequency response 703 has a well-defined peak, because of linear dynamics of the underlying mass-spring system.

The frequency responses 701-703 may be obtained for the mass-spring system formed by the (i) elastic mount 111 and (*ii*) the mirror 150, wherein the elastic mount includes two or more sets of torsion springs 601-603, 611-613, e.g., according to the examples described above.

For example, the frequency responses 701-703 may be obtained if a torsional eigenmode of a mass-spring system comprising one or more torsion springs and a mirror is resonantly driven. For example, the control device 171 may output an appropriate control signal 179 to the actuator 172 to resonantly drive the torsional eigenmode of the mass-spring system formed by the elastic mount 111 and the mirror 150, by rotating the base 141.

By using multiple torsion springs in multiple planes - as described above - it becomes possible to tailor the frequency response. By using appropriate geometrical parameters for the torsion springs, it becomes possible to tailor the frequency response. Also, by using appropriate relative arrangements - e.g., an appropriate inter-torsion spring gap width - of the torsion springs, it becomes possible to tailor the frequency response.

Tailoring the frequency response can correspond to selecting between the degressive frequency response 701, the progressive frequency response 702, and the harmonic frequency response 703.

According to various examples, a harmonic frequency response 703 can be selected. To do so, one or more geometrical parameters of the torsion springs, the length of the torsion springs, the inter-torsion spring gap width, and/or the count of torsion springs can be varied.

It has been found that the harmonic frequency response 703 can be obtained by a parallel connection of at least one first torsion spring and at least one second torsion spring between a base and a mirror, wherein a first mass-spring system formed by (*i*) the mirror and (*ii*) the at least first torsion spring has first non-linear dynamics resulting in the progressive frequency response 702 and wherein a second mass-spring system formed by (*i*) the mirror and *(ii)* the at least second torsion spring has a second non-linear dynamics resulting in the degressive frequency response 701. However, examples without the first set and the second set as defined in claim 1 are not covered by the subject-matter of the claims. For example, referring to the example of FIG. 2 and FIG. 10, the inner torsion springs 602, 612 form, together with the mirror 150, a first mass-spring system that has first non-linear dynamics resulting in the progressive frequency response 702; while the outer torsion springs 601, 603, 611, 613 form, together with the mirror 150, a second mass-spring system that has second non-linear dynamics resulting in the degressive frequency response 701. The parallel coupling of the first and second mass-spring systems result in an overall mass-spring system formed by the elastic coupling that has the harmonic frequency response 703.

Summarizing, above techniques have been described which facilitate tailoring the frequency response of an elastic mount including multiple torsion springs arranged in multiple planes and in-parallel to each other. Specifically, harmonic frequency responses may be obtained, by reducing non-linear contributions of the dynamics of the mass-spring system formed by the elastic mount and a mirror.

Avoiding non-linear dynamics and using a harmonic frequency response may have various advantages. First, the frequency may not change with amplitude and various amplitudes can be implemented at each frequency. Thereby, if two sequentially arranged scan units 100 are used for 2-D scanning, the mirrors of the two scan units 100 can be driven at different amplitudes at the same frequency - which provides for flexibility in the scanning pattern. Second, the closed-loop control can be implemented with less complexity. For example, amplitude sweeps can be easily implemented.

For instance, various examples have been described in which a set includes a count of three or four torsion springs, it would also be possible to include even more torsion springs per set (cf. FIG. 15 where there are five torsion springs 601-605 per set).

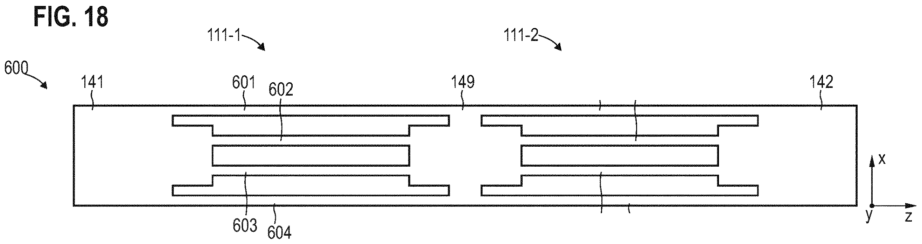

For further illustration, it would be possible that two elastic mounts as described above are serially coupled (cf. FIG. 18, where two exemplary elastic mounts 111-1 and 111-2 are serially coupled; the various elastic mounts as described herein could be serially coupled in other examples). By the serially coupling, the stiffness against flexure is increased; while the torsion stiffness remains essentially unchanged. Two or more sets of parallel torsion springs can be coupled in the intermediate part 149, by a respective spacer 142 (not shown in FIG. 18).

## Claims

1. A scan unit (100), comprising:
- a base (141),
- a mirror (150) for steering light (180),
**characterised in that** it further comprises
- a first set (600) comprising at least three torsion springs (601-605) extending along an axis (z, 119) between the base (141) and the mirror (150) in a first plane (691), and
- a second set (610) comprising at least three torsion springs (611-613) extending along the axis (z, 119) between the base (141) and the mirror (150) in a second plane (692) that is offset and parallel to the first plane (691).

2. The scan unit (100) of claim 1,
wherein at least one geometrical parameter of the at least three torsion springs (601-605) of the first set (600) is varied across the first set (600), the at least one geometrical parameter being selected from a group comprising: a length (661-664); an area of a cross-section perpendicular to the axis (z, 119); a shape of the cross-section; a width (651-654) perpendicular to the axis (z, 119).

3. The scan unit (100) of claim 1 or 2, wherein a first length (662, 663) of at least one inner torsion spring (602, 603) of the first set (600) is in the range of 70 % to 95 % of a second length (661, 664) of outer torsion springs (601, 603, 604) of the first set (600).

4. The scan unit (100) of any one of the preceding claims,
wherein a gap width (671-673) between adjacent torsion springs (601-603, 611-613) perpendicular to the axis (z, 119) is varied across the first set (600).

5. The scan unit (100) of any one of the preceding claims,
wherein the at least three torsion springs (601-605) of the first set (600) can be mapped to the at least three torsion springs (611-613) of the second set (610) by a global translational shift (699) along a further axis (y) perpendicular to the first plane (691) and the second plane (692).

6. The scan unit (100) of any one of the preceding claims,
wherein the at least three torsion springs (601-605) of the first set (600) and the at least three torsion springs (611-613) of the second set (610) are configured to twist around a common torsion axis (501) arranged in-between the first plane (691) and the second plane (692).

7. The scan unit (100) of any one of the preceding claims,
wherein each one of the first set (600) and the second set (610) comprises outer torsion springs (601, 603, 604, 611, 613, 614) and one or more inner torsion springs (602, 603, 612, 613) arranged in-between the respective outer torsion springs (601, 603, 604, 611, 613, 614),
wherein a first mass-spring system formed by (*i*) the mirror (150) and *(ii)* the outer torsion springs of the first set (600) and the second set (610) has a first non-linear dynamics,
wherein a second mass-spring system formed by (*i*) the mirror (150) and the one or more inner torsion springs (601-605) of the first set (600) and the second set (610) has a second non-linear dynamics,
wherein a first one of the first non-linear dynamics and the second non-linear dynamics results in a progressive first frequency response (702),
wherein a second one of the first non-linear dynamics and the second non-linear dynamics results in a degressive second frequency response (701).

8. A system (90), comprising:
- the scan unit (100) of any one of the preceding claims, and
- a control device (171) configured to operate an actuator (172) to drive a resonant torsional eigenmode (502) of a mass-spring system formed by (*i*) the mirror (150) and (*ii*) the at least three torsion springs (601-605) of the first set (600) and the at least three torsion springs of the second set (610).

## Patentansprüche

1. Scaneinheit (100), umfassend:
- eine Basis (141);
- einen Spiegel (150) zum Lenken von Licht (180),
**dadurch gekennzeichnet, dass** sie ferner Folgendes umfasst
- einen ersten Satz (600), der mindestens drei Torsionsfedern (601-605) umfasst, die sich entlang einer Achse (z, 119) zwischen der Basis (141) und dem Spiegel (150) in einer ersten Ebene (691) erstrecken, und
- einen zweiten Satz (610), der mindestens drei Torsionsfedern (611-613) umfasst, die sich entlang der Achse (z, 119) zwischen der Basis (141) und dem Spiegel (150) in einer zweiten Ebene (692) erstrecken, die von der ersten Ebene (691) versetzt und parallel dazu ist.

2. Scaneinheit (100) nach Anspruch 1,
wobei mindestens ein geometrischer Parameter der mindestens drei Torsionsfedern (601-605) des ersten Satzes (600) über den ersten Satz (600) variiert, wobei der mindestens eine geometrische Parameter ausgewählt ist aus einer Gruppe, die Folgendes umfasst: eine Länge (661-664); eine Fläche eines Querschnitts senkrecht zu der Achse (z, 119); eine Form des Querschnitts; eine Breite (651-654) senkrecht zu der Achse (z, 119).

3. Scaneinheit (100) nach Anspruch 1 oder 2,
wobei eine erste Länge (662, 663) mindestens einer inneren Torsionsfeder (602, 603) des ersten Satzes (600) im Bereich von 70 % bis 95 % einer zweiten Länge (661, 664) äußerer Torsionsfedern (601, 603, 604) des ersten Satzes (600) liegt.

4. Scaneinheit (100) nach einem der vorhergehenden Ansprüche,
wobei eine Spaltbreite (671-673) zwischen angrenzenden Torsionsfedern (601-603, 611-613) senkrecht zu der Achse (z, 119) über den ersten Satz (600) variiert.

5. Scaneinheit (100) nach einem der vorhergehenden Ansprüche,
wobei die mindestens drei Torsionsfedern (601-605) des ersten Satzes (600) auf die mindestens drei Torsionsfedern (611-613) des zweiten Satzes (610) durch eine globale translatorische Verschiebung (699) entlang einer weiteren Achse (y) senkrecht zu der ersten Ebene (691) und der zweiten Ebene (692) abgebildet werden können.

6. Scaneinheit (100) nach einem der vorhergehenden Ansprüche,
wobei die mindestens drei Torsionsfedern (601-605) des ersten Satzes (600) und die mindestens drei Torsionsfedern (611-613) des zweiten Satzes (610) dazu ausgelegt sind, sich um eine gemeinsame Torsionsachse (501) zu verdrehen, die zwischen der ersten Ebene (691) und der zweiten Ebene (692) angeordnet ist.

7. Scaneinheit (100) nach einem der vorhergehenden Ansprüche,
wobei jeder des ersten Satzes (600) und des zweiten Satzes (610) äußere Torsionsfedern (601, 603, 604, 611, 613, 614) und eine oder mehrere innere Torsionsfedern (602, 603, 612, 613), die zwischen den jeweiligen äußeren Torsionsfedern (601, 603, 604, 611, 613, 614) angeordnet sind, umfasst,
wobei ein erstes Masse-Feder-System, das durch (*i*) den Spiegel (150) und (*ii*) die äußeren Torsionsfedern des ersten Satzes (600) und des zweiten Satzes (610) gebildet ist, eine erste nicht-lineare Dynamik aufweist,
wobei ein zweites Masse-Feder-System, das durch (*i*) den Spiegel (150) und die eine oder mehreren inneren Torsionsfedern (601-605) des ersten Satzes (600) und des zweiten Satzes (610) gebildet ist, eine zweite nicht-lineare Dynamik aufweist,
wobei eine erste der ersten nicht-linearen Dynamik und der zweiten nicht-linearen Dynamik in einem ansteigenden Frequenzgang (702) resultiert,
wobei eine zweite der ersten nicht-linearen Dynamik und der zweiten nicht-linearen Dynamik in einem absteigenden Frequenzgang (701) resultiert.

8. System (90), umfassend:
- die Scaneinheit (100) nach einem der vorhergehenden Ansprüche, und
- eine Steuervorrichtung (171), die dazu ausgelegt ist, einen Aktuator (172) zu betätigen, um eine resonante Torsionseigenmode (502) eines Masse-Feder-Systems anzutreiben, das durch (*i*) den Spiegel (150) und (*ii*) die mindestens drei Torsionsfedern (601-605) des ersten Satzes (600) und die mindestens drei Torsionsfedern des zweiten Satzes (610) gebildet ist.

## Revendications

1. Unité de balayage (100), comprenant :
- une base (141),
- un miroir (150) pour orienter de la lumière (180),
**caractérisée en ce qu'**elle comprend en outre
- un premier ensemble (600) comprenant au moins trois ressorts de torsion (601-605) s'étendant le long d'un axe (z, 119) entre la base (141) et le miroir (150) dans un premier plan (691), et
- un second ensemble (610) comprenant au moins trois ressorts de torsion (611-613) s'étendant le long de l'axe (z, 119) entre la base (141) et le miroir (150) dans un second plan (692) qui est décalé et parallèle par rapport au premier plan (691).

2. Unité de balayage (100) selon la revendication 1,
dans laquelle au moins un paramètre géométrique des au moins trois ressorts de torsion (601- 605) du premier ensemble (600) est varié dans tout le premier ensemble (600), l'au moins un paramètre géométrique étant sélectionné parmi un groupe comprenant : une longueur (661-664) ; une superficie d'une section transversale perpendiculaire à l'axe (z, 119) ; une forme de la section transversale ; une largeur (651-654) perpendiculaire à l'axe (z, 119).

3. Unité de balayage (100) selon la revendication 1 ou 2,
dans laquelle une première longueur (662, 663) d'au moins un ressort de torsion intérieur (602, 603) du premier ensemble (600) est dans la plage de 70 % à 95 % d'une seconde longueur (661, 664) de ressorts de torsion extérieurs (601, 603, 604) du premier ensemble (600).

4. Unité de balayage (100) selon l'une quelconque des revendications précédentes,
dans laquelle une largeur d'espace (671-673) entre des ressorts de torsion adjacents (601-603, 611-613) perpendiculaire à l'axe (z, 119) est variée dans tous le premier ensemble (600).

5. Unité de balayage (100) selon l'une quelconque des revendications précédentes,
dans laquelle les au moins trois ressorts de torsion (601-605) du premier ensemble (600) peuvent être mis en correspondance sur les au moins trois ressorts de torsion (611-613) du second ensemble (610) par un déplacement translationnel global (699) le long d'un axe supplémentaire (y) perpendiculaire au premier plan (691) et au second plan (692).

6. Unité de balayage (100) selon l'une quelconque des revendications précédentes,
dans laquelle les au moins trois ressorts de torsion (601-605) du premier ensemble (600) et les au moins trois ressorts de torsion (611-613) du second ensemble (610) sont configurés pour se tordre autour d'un axe de torsion commun (501) agencé entre le premier plan (691) et le second plan (692).

7. Unité de balayage (100) selon l'une quelconque des revendications précédentes,
dans laquelle chacun du premier ensemble (600) et du second ensemble (610) comprend des ressorts de torsion extérieurs (601, 603, 604, 611, 613, 614) et un ou plusieurs ressorts de torsion intérieurs (602, 603, 612, 613) agencés entre les ressorts de torsion extérieurs respectifs (601, 603, 604, 611, 613, 614),
dans laquelle un premier système ressort de masse formé par (*i*) le miroir (150) et (*ii*) les ressorts de torsion extérieurs du premier ensemble (600) et du second ensemble (610) a une première dynamique non linéaire,
dans laquelle un second système ressort de masse formé par (i) le miroir (150) et l'un ou les plusieurs ressorts de torsion intérieurs (601-605) du premier ensemble (600) et du second ensemble (610) a une seconde dynamique non linéaire,
dans laquelle une première de la première dynamique non linéaire et de la seconde dynamique non linéaire a pour résultat une première réponse de fréquence progressive (702),
dans laquelle une seconde de la première dynamique non linéaire et de la seconde dynamique non linéaire a pour résultat une seconde réponse de fréquence dégressive (701).

8. Système (90), comprenant :
- l'unité de balayage (100) selon l'une quelconque des revendications précédentes, et
- un dispositif de commande (171) configuré pour faire fonctionner un actionneur (172) pour entraîner un mode propre résonant de torsion (502) d'un système ressort de masse formé par (i) le miroir (150) et (*ii*) les au moins trois ressorts de torsion (601-605) du premier ensemble (600) et les au moins trois ressorts de torsion du second ensemble (610).
